# EUROPÄISCHE PATENTANMELDUNG

(11) **EP 1 283 656 A2**
(43) Veröffentlichungstag der Anmeldung: **12.02.2003**
(21) Anmeldenummer: 02017179.9
(22) Anmeldetag: 31.07.2002
(51) Int. Cl.: H04R 1/02, B60R 11/02

(54) **Lautsprechergehäuse**

(30) Priorität: 11.08.2001 DE 20113414 U
(71) Anmelder: Schefenacker Vision Systems Germany GmbH & Co. KG, 73730 Esslingen (DE)
(72) Erfinder: Serve, Gregor, 71522 Backnang (DE)
(74) Vertreter: Jackisch-Kohl, Anna-Katharina

(57) **Zusammenfassung**

Insbesondere im Kraftfahrzeugbereich ist es bekannt, in Einbauöffnungen im Innenraum des Fahrzeuges Lautsprechergehäuse (1) einzubauen. Das Lautsprechergehäuse (1) besteht aus zwei Gehäuseteilen, in die ein Lautsprecher eingebaut ist und die miteinander verbunden sind. Damit das Lautsprechergehäuse (1) konstruktiv einfach ausgebildet ist und kostengünstig hergestellt werden kann, ist wenigstens einer der Gehäuseteile (2, 3) vor dem Verbinden zum Gehäuse (1) zumindest teilweise mit einer Beschichtung versehen. Bei der Herstellung des Lautsprechergehäuses (1) wird der beschichtete Gehäuseteil (2, 3) in eine Form gelegt, dort lagegesichert und dann mit dem oder den anderen Gehäuseteilen (2, 3) durch Schweißen fest verbunden. Dadurch läßt sich das Lautsprechergehäuse (1) kostengünstig fertigen und mit der gewünschten Beschichtung versehen. Das Lautsprechergehäuse (1) eignet sich vorzugsweise für Kraftfahrzeuge.

## Beschreibung

Die Erfindung betrifft ein Lautsprechergehäuse nach dem Oberbegriff des Anspruches 1.

Insbesondere im Kraftfahrzeugbereich ist es bekannt, in Einbauöffnungen im Innenraum des Fahrzeuges Lautsprechergehäuse einzubauen, in denen jeweils ein Lautsprecher eingebaut ist. Die Lautsprechergehäuse werden durch Spritzgießen so hergestellt, daß sie eine Einbauöffnung zum Einsetzen des Lautsprechers aufweisen.

Der Erfindung liegt die Aufgabe zugrunde, das gattungsgemäße Lautsprechergehäuse so auszubilden, daß es konstruktiv einfach ausgebildet ist und kostengünstig hergestellt werden kann.

Diese Aufgabe wird beim gattungsgemäßen Lautsprechergehäuse erfindungsgemäß mit den kennzeichnenden Merkmalen des Anspruches 1 gelöst.

Beim erfindungsgemäßen Lautsprechergehäuse wird wenigstens einer der Gehäuseteile vor dem Verbinden zum kompletten Gehäuse mit den anderen Gehäuseteilen zumindest teilweise beschichtet. Dieser beschichtete Gehäuseteil wird in eine Form gelegt, dort lagegesichert und dann mit dem oder den anderen Gehäuseteilen durch Schweißen fest verbunden. Auf diese Weise läßt sich das erfindungsgemäße Lautsprechergehäuse kostengünstig fertigen und mit der gewünschten Beschichtung versehen. Das Lautsprechergehäuse kann dadurch optimal an die Umgebung des Einbaubereiches angepaßt werden. Das erfindungsgemäße Lautsprechergehäuse wird bevorzugt in Kraftfahrzeuge eingebaut. Je nach Einbauraum kann die Beschichtung aus den unterschiedlichsten Materialien bestehen. Zumindest die Sichtseite des Lautsprechergehäuse wird mit einem solchen Material beschichtet, daß es in seiner Einbaulage im Kraftfahrzeug optisch nicht auffällt.

Vorteilhaft ist der gesamte Gehäuseteil mit der Beschichtung versehen. Dies hat den Vorteil, daß beim späteren Einbau des Lautsprechergehäuses nicht auf eine exakte Einbaulage des beschichteten Gehäuseteiles geachtet werden muß.

Die Beschichtung kann aus den unterschiedlichsten Materialien bestehen, wie aus teppichartigem Material, aus Leder, aus Lederimitaten, einer Kunststoffolie oder aus elastischen Kunststoffen.

In der Einbauform lassen sich die Gehäuseteile durch Schweißen miteinander verbinden, ohne daß die Beschichtung beeinträchtigt wird.

Die Gehäuseteile können durch Spiegelschweißen oder durch Reibschweißen miteinander verbunden werden. Bei diesen Schweißverfahren werden die Gehäuseteile in dem Bereich, in dem sie miteinander verbunden werden sollen, auf eine Temperatur oberhalb der Schmelztemperatur des Kunststoffes aufgeheizt, aus dem sie bestehen. Anschließend werden die aufgeheizten Bereiche unter Druck so zusammengefügt, daß eine möglichst homogene Verbindung entsteht. Beim Reibschweißen wird die erforderliche Wärme durch Relativbewegungen der Fügeflächen der Gehäuseteile unter Druck erzeugt. Sobald die Schweißtemperatur erreicht wird, wird der Reibvorgang gestoppt und die Gehäuseteile mit erhöhtem Druck zusammengefügt.

Als Materialien für die Gehäuseteile kommen thermoplastische oder thermoelastische Kunststoffe in Betracht.

Die Gehäuseteile müssen nicht aus dem gleichen Material bestehen. So kann für die unterschiedlichen Gehäuseteile des erfindungsgemäßen Lautsprechergehäuses je nach den Anforderungen ein unterschiedlicher thermoplastischer oder thermoelastischer Kunststoff verwendet werden.

Weitere Merkmale der Erfindung ergeben sich aus den weiteren Ansprüchen, der Beschreibung und den Zeichnungen.

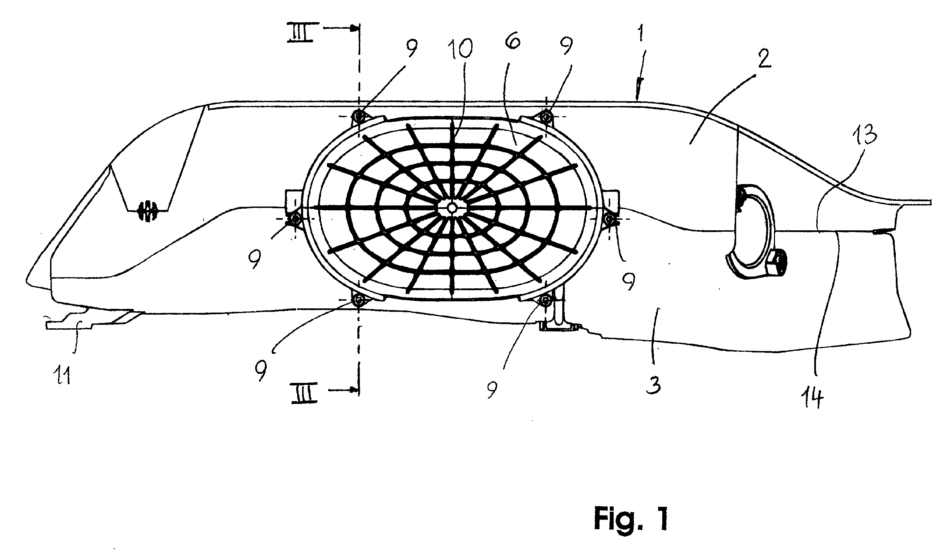

Die Erfindung wird anhand eines in den Zeichnungen dargestellten Ausführungsbeispieles näher erläutert. Es zeigen
- Fig. 1: ein erfindungsgemäßes Gehäuse für einen Lautsprecher in Stirnansicht,
- Fig. 2: in Seitenansicht das Gehäuse gemäß Fig. 1,
- Fig. 3: einen Schnitt längs der Linie III-III in Fig. 1.

Das Gehäuse 1 ist ein Lautsprechergehäuse, vorzugsweise ein Baßreflexgehäuse. Es ist zweiteilig ausgebildet und besteht aus zwei Gehäuseteilen 2, 3, die zum Gehäuse 1 zusammengeschweißt sind.

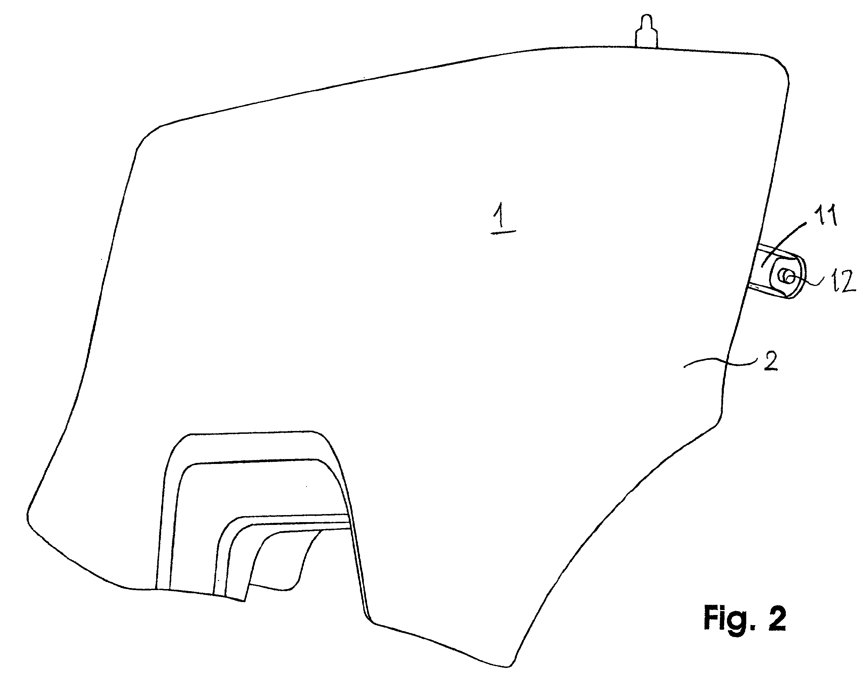

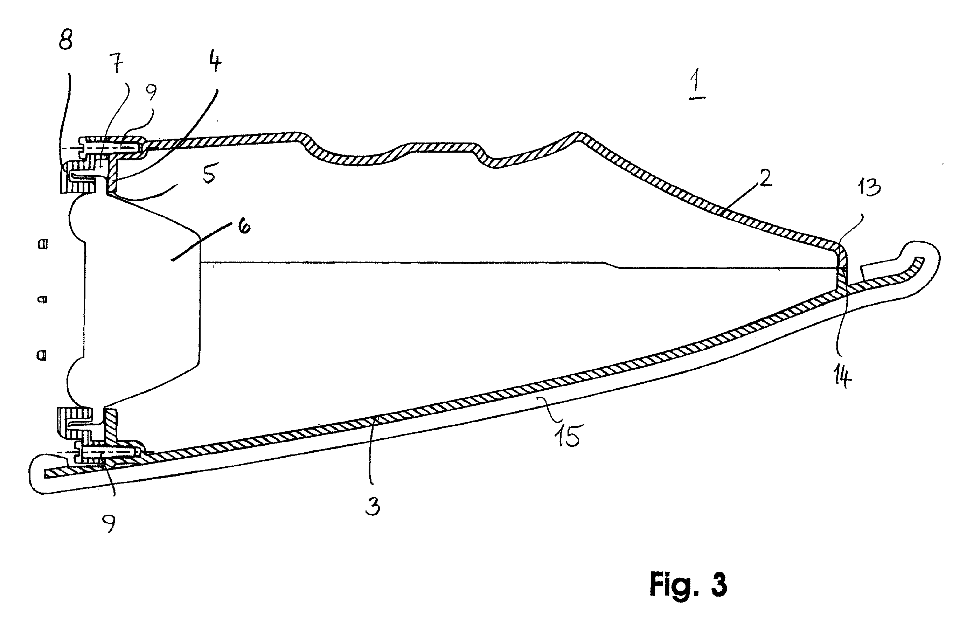

Das Gehäuse 1 ist flach ausgebildet und hat, wie Fig. 3 zeigt, etwa dreieckförmigen Querschnitt. Das Gehäuse 1 ist an seiner einen Stirnseite 4 mit einer Einbauöffnung 5 für einen Lautsprecher 6 versehen. Er wird in bekannter Weise an der Stirnseite 4 befestigt, vorzugsweise verschraubt, so daß der Lautsprecher 6 bei Bedarf ausgetauscht werden kann. Wie Fig. 3 zeigt, wird hierzu der Rand 7 des Lautsprechers 6, der umlaufend ausgebildet und radial angeordnet ist, zwischen der Stirnseite 4 des Gehäuses 1 und einem Haltering 8 eingeklemmt, der mit Schrauben 9 am Gehäuse 1 befestigt wird. Das Volumen des Innenraumes des Gehäuses 1 ist auf den Lautsprecher 6 abgestimmt. Ist der Lautsprecher 6 ein Baßlautsprecher, dann ist das Volumen des Gehäuseinnenraumes so abgestimmt, daß das Gehäuse 1 als Baßreflexgehäuse wirken kann. Vor dem Lautsprecher 6 befindet sich ein Schutzgitter 10, um den Lautsprecher vor Beschädigung zu schützen. Das Schutzgitter 10 ist in bekannter Weise am Gehäuse 1 befestigt. Das Gehäuse selbst hat abstehende Laschen 11, die mit mindestens einer Durchtrittsöffnung 12 (Fig. 2) für Befestigungsschrauben versehen sind, um das Gehäuse 1 an seinem Einbauort zu montieren.

Die beiden Gehäuseteile 2, 3 bestehen jeweils aus einem schweißbaren Kunststoff, insbesondere Thermoplast. Als Thermoplast kann beispielsweise Polycarbonat/Acrylnitril-Butadien-Styrol-Copolymere (PC/ABS) verwendet werden. Die beiden Gehäuseteile 2, 3 werden durch Schweißen zum Gehäuse 1 verbunden. Zum Verschweißen der beiden Gehäuseteile 2, 3 wird das Spiegel- oder das Reibschweißen eingesetzt. Hierbei wird der Kunststoff der Gehäuseteile 2, 3 so erwärmt, daß sie fest miteinander verbunden werden.

Als Material kommen auch Thermoelaste in Betracht.

Im dargestellten Ausführungsbeispiel werden die beiden Gehäuseteile 2, 3 stoßend längs ihrer aufeinanderliegenden Ränder 13, 14 in der beschriebenen Weise miteinander verschweißt.

Wird das Gehäuse 1 in ein Fahrzeug eingebaut, wird zumindest die Sichtseite des Gehäuses 1 an die Wageninnenseite angepaßt. Vorteilhaft wird zumindest der die Sichtseite aufweisende Gehäuseteil 2 oder 3 außenseitig beschichtet. Als Beschichtungsmaterial kommen beispielsweise Teppiche, Leder, Lederimitate, elastische Kunststoffe und dergleichen in Betracht. Auch kann zumindest auf den sichtbaren Teil des entsprechenden Gehäuseteiles 2, 3 eine Kunststoffolie aufgebracht, insbesondere aufgeklebt werden. Vorteilhaft ist es, den entsprechenden gesamten Gehäuseteil 2 bzw. 3 außenseitig mit der Beschichtung 15 (Fig. 3) zu versehen. Diese Beschichtung 15 ist vor dem Zusammenschweißen der Gehäuseteile 2, 3 auf dem entsprechenden Gehäuseteil aufgebracht. Dieser so beschichtete Gehäuseteil wird in eine (nicht dargestellte) Form gelegt und dort lagegesichert. In der Form wird der beschichtete Gehäuseteil mit dem anderen Gehäuseteil zusammengeschweißt.

Die Art der Beschichtung richtet sich vorteilhaft nach dem Einbauort im Kraftfahrzeug. Da die Beschichtung aus den unterschiedlichsten Materialien bestehen kann, kann der entsprechende Gehäuseteil optimal an die Umgebung seines Einbauortes angepaßt werden. Da die Beschichtung 15 vor dem Zusammenschweißen der beiden Gehäuseteile 2, 3 aufgebracht wird, lassen sich diese Gehäuseteile problemlos zusammenschweißen.

Das Gehäuse 1 kann selbstverständlich auch so ausgebildet sein, daß es aus mehr als zwei Gehäuseteilen besteht. In diesem Falle werden die verschiedenen Gehäuseteile zusammengeschweißt, wobei zumindest der die Sichtseite aufweisende Gehäuseteil mit der Beschichtung 15 versehen wird.

Bei sämtlichen Ausführungsformen ist es darüber hinaus möglich, sämtliche Gehäuseteile 2, 3 an der Außenseite mit der Beschichtung 15 zu versehen. Sie kann je nach Material in geeigneter Weise aus dem Gehäuseteil befestigt werden.

## Patentansprüche

1. Lautsprechergehäuse, vorzugsweise zum Einbau in Kraftfahrzeuge, mit wenigstens zwei Gehäuseteilen, in welche wenigstens ein Lautsprecher eingebaut ist und die miteinander verbunden sind,
**dadurch gekennzeichnet, daß** wenigstens einer der Gehäuseteile (2, 3) vor dem Verbinden zum Gehäuse (1) zumindest teilweise mit wenigstens einer Beschichtung (15) versehen ist.

2. Lautsprechergehäuse nach Anspruch 1,
**dadurch gekennzeichnet, daß** der gesamte Gehäuseteil (2, 3) mit der Beschichtung (15) versehen ist.

3. Lautsprechergehäuse nach Anspruch 1 oder 2,
**dadurch gekennzeichnet, daß** die Beschichtung (15) aus teppichartigem Material besteht.

4. Lautsprechergehäuse nach Anspruch 1 oder 2,
**dadurch gekennzeichnet, daß** die Beschichtung (15) aus Leder besteht.

5. Lautsprechergehäuse nach Anspruch 1 oder 2,
**dadurch gekennzeichnet, daß** die Beschichtung (15) aus Lederimitat besteht.

6. Lautsprechergehäuse nach Anspruch 1 oder 2,
**dadurch gekennzeichnet, daß** die Beschichtung (15) durch wenigstens eine Kunststoffolie gebildet ist.

7. Lautsprechergehäuse nach Anspruch 1 oder 2,
**dadurch gekennzeichnet, daß** die Beschichtung (15) aus elastischem Kunststoff besteht.

8. Lautsprechergehäuse nach einem der Ansprüche 1 bis 7,
**dadurch gekennzeichnet, daß** die beiden Gehäuseteile (2, 3) durch wenigstens eine Schweißnaht (13, 14) zusammengehalten sind.

9. Lautsprechergehäuse nach Anspruch 8,
**dadurch gekennzeichnet, daß** die Schweißnaht (13, 14) eine Spiegelschweißnaht ist.

10. Lautsprechergehäuse nach Anspruch 8,
**dadurch gekennzeichnet, daß** die Schweißnaht (13, 14) eine Reibschweißnaht ist.

11. Lautsprechergehäuse nach einem der Ansprüche 1 bis 10,
**dadurch gekennzeichnet, daß** zumindest ein Gehäuseteil, vorzugsweise alle Gehäuseteile (2, 3), aus thermoplastischem Kunststoff bestehen.

12. Lautsprechergehäuse nach einem der Ansprüche 1 bis 10,
**dadurch gekennzeichnet, daß** zumindest ein Gehäuseteil, vorzugsweise alle Gehäuseteile (2, 3), aus thermoelastischem Kunststoff bestehen.
